# EUROPEAN PATENT SPECIFICATION

(11) **EP 1 294 810 B1**
(45) Date of publication and mention of the grant of the patent: **07.07.2004**
(21) Application number: 01946298.5
(22) Date of filing: 13.06.2001
(51) Int. Cl.: C08L 95/00, C09D 195/00, C08K 3/26, C08K 3/30

(54) **ASPHALT EMULSTION BASED DAMPING COMPOSITION**
AUF ASPHALTEMULSION BASIERENDE DÄMPFUNGSZUSAMMENSETZUNG
AMORTISSEMENT A BASE D'UNE EMULSION D'ASPHALTE

(30) Priority: 14.06.2000 US 211692 P
(43) Date of publication of application: 26.03.2003
(73) Proprietor: THE DOW CHEMICAL COMPANY, Midland, Michigan 48674 (US); Ergon Asphalt & Emulsions, Inc., Jackson, MI 39215-1639 (US)
(72) Inventor: XIAO, Hong, Farmington Hills, MI 48335 (US); SOPHIEA, Daniel, P., Lake Orion, MI 48362 (US); DUMAS, John, M., Madison, MI 39110 (US); GORE, Horace, R., Brandon, MI 39047 (US)
(74) Representative: Raynor, John
(86) International application number: PCT/US2001/018947
(87) International publication number: WO 2001/096480

(56) References cited:
- EP-A- 0 188 780
- US-A- 3 689 298
- US-A- 5 102 728
- DATABASE WPI Section Ch, Week 199726 Derwent Publications Ltd., London, GB; Class A18, AN 1997-285270 XP002186226 & JP 09 104842 A (COSMO OIL CO LTD), 22 April 1997 (1997-04-22)
- DATABASE WPI Section Ch, Week 199850 Derwent Publications Ltd., London, GB; Class A88, AN 1998-588708 XP002186227 & JP 10 264293 A (COSMO OIL CO LTD), 6 October 1998 (1998-10-06)

## Description

This invention relates to an asphalt emulsion based composition which is useful in providing noise and vibration damping properties to substrates. In another embodiment this invention relates to a process for applying a sound damping composition to a substrate, and the sound damped substrates.

Many apparatus or machines generate noise and vibrations during operation. In addition, vehicles generate noise and vibrations during operation. Such noise and vibrations can be distracting or annoying to people who use or come into contact with these machines or apparatus. This is particularly problematic with respect to automobiles. In automobiles, asphalt based pads are laid on the floor-board to dampen the noise and vibration coming into the passenger compartment. The problem is that floor-boards tend to have multiple indentations and shapes which are difficult to conform to. Often, individual and various shaped asphalt vibration damping pads (usually referred to as "mastic pads") are manually placed in discreet areas to treat the floor-board area of vehicles. Manual applications of individually shaped parts is an expensive operation in the vehicle assembly process and application and repeatability and reliability is often substandard. Therefore what is needed is a robotic way to place said damping composition on the floor-board which conforms to the shape of the floor board and guarantees application repeatibility and reliability. Some patents disclose the use of 100 percent solid content epoxy resin sprayable compositions for this use. See World Patent 99/16840. The compositions disclosed function quite well, but are quite expensive to use. What is needed is a near zero volatile organic (VOC) content composition which is conformable to odd shapes and surfaces, can provide good damping properties and can preferably be sprayed or stream applied to the vehicle structure on the sealer application deck. Typically, to achieve the above requirements, materials are required to be solvent borne to reduce viscosity for spray or stream application or are hot melt applied. Application on the sealer deck is required to utilize the benefit of the paint curing ovens, thereby maximizing material conformability and resulting in coalescence or curing to achieve film formation. In general, water containing compositions are not applicable for sealer or paint deck applications because the water vaporizes during the curing process and results in voids, cracking or loss of adhesion to the substrate. To accommodate water -based emulsions in sealer deck applications, one must generally apply low heat for long times to gradually allow water vapor to escape without the formation of voids or cracks due to film formation. What is needed is a composition which is low VOC, water based, can be dried in automobile ovens, can be spray, stream or swirl applied and which gives excellent damping properties.

The invention is a composition which is useful to dampen noise and vibrations which composition can be applied to and adhered to a substrate. The composition comprises an emulsion or dispersion of asphalt in water and one or more fillers. Preferably the fillers are alkaline earth metal carbonates, alkaline metal carbonates, or sulfates such as magnesium calcium carbonate, calcium carbonate or barium sulfate. In another embodiment, the invention is a process for applying a damping composition to a substrate which comprises contacting a composition of an emulsion of asphalt in water and one or more fillers with a substrate. Preferably the process further comprises exposing the asphalt emulsion on the surface of the substrate to a source of heat so as to dry the composition on the substrate. This results in a coating of asphalt and filler on the substrate. In a preferred embodiment the substrate is a surface of a vehicle such as the floor-board, trunk well, wheel well, rocker panel or the underbody of the vehicle. The composition and process of the invention may be used on automobiles, trucks, busses and trains.

The composition of the invention is bakeable, that is, dries in a primer oven, provides a coating on a substrate which adheres well to the substrate and provides excellent damping performance. Preferably a low heat pre-gel oven is not needed to dry the composition. Preferably the damping composition can be baked or dried in an oven used in an automobile plant for curing a primer or an exterior coating. Preferably the composition is spray, stream or swirl applied.

The composition of the invention comprises a water-based emulsion comprising asphalt in water and one or more fillers. The emulsion comprises asphalt emulsified or dispersed in water. Asphalt is a residue of fractionally distilled petroleum crude oil. The actual asphalt used to make asphalt emulsion is a engineered product since the composition of a particular asphalt varies from refinery to refinery. Typically asphalt is emulsified in water using clay and/or an organic surfactant. One skilled in the art recognizes the useful clays and organic surfactants. Among preferred asphalt emulsions are ERTECH 20* asphalt emulsion, ERTECH* 2000 asphalt emulsion and ERTECH* 2020 asphalt emulsion available from Ergon Asphalt and Emulsions Incorporated (*trademark of Ergon Asphalt and Emulsions, Incorporated). A more preferred asphalt emulsion is ERTECH* 20 asphalt emulsion.

The presence of fillers in asphalt emulsions enhances the damping performance of the asphalt composition and the rheology of the uncured asphalt composition. In order for the composition to be spray, stream or swirl applicable and to give enhanced damping properties, the fillers are preferably low oil absorption fillers. A low oil absorption filler preferably exhibits an oil absorption of less than 12 gram/100 gram. The filler also provides good damping properties. The filler level should be selected to avoid raising the viscosity of the composition to a level such that the composition cannot be applied by the desired application method, such as spray, stream or swirl methods.
Generally low surface area fillers give lower oil absorption. Preferably the low surface area or low oil absorption filler is an alkaline or alkaline earth metal carbonate, a sulfate, or a mixture thereof. Preferred sulfates are alkali metal sulfates and alkaline earth metal sulfates. More preferred fillers include calcium carbonate, magnesium calcium carbonate, barium sulfate, or a mixture thereof. The filler can be a natural clay which contains one or more of the compounds described above, for example, Dolomite which contains calcium carbonate and magnesium carbonate.

The composition of the invention can be applied using any conventional technique. Preferably the composition of the invention is applied by spray, stream or swirl application. The viscosity of the composition may be adjusted to fit the desired application technique.

The amount of asphalt emulsion in the composition is preferably 35 percent by weight or greater, more preferably 50 percent by weight or greater and most preferably 55 percent by weight or greater. Preferably the amount of asphalt emulsion in the composition is 75 percent by weight or less and more preferably 65 percent by weight or less. Preferably the amount of filler in the composition is 25 percent by weight or greater and more preferably 35 percent by weight or greater. Preferably the amount of filler in the composition is 65 percent by weight or less, more preferably 50 percent by weight or less and most preferably 45 percent by weight or less.

Preferably, the asphalt composition of the invention further comprises a surfactant, solvent, or a plasticizer which improves rheology and the bakeability of the composition. Bakeability means the ability of the composition to be dried at elevated temperatures without destroying the coating and damping efficacy of the dried composition. The efficacy of the composition can be degraded by cracking, bubble or void formation, tunneling (formation of air tunnels in the composition) or delamination of the composition from the substrate. Any surfactant may be used such as cationic, anionic and nonionic surfactants. Preferred classes of surfactants include alkyl phenoxy alkanols, alkyl phenoxy alkoxylated alkanols or lignosulfates. More preferred classes of surfactants include alkyl phenoxy alkanols and akyl phenoxy alkoxylated alkanols. Preferred surfactants include non-ionic surfactants such as Igepal Co 530 branched ethyloxylated nonyl phenol, Co 630 made by Rhone Poulenc nonylphenoxy poly(ethylenoxy)ethanol, TRITON* X45 octylphenoxy ethanol surfactant and TRITON* CF10 modified alkyl aryl ether available from The Dow Chemical Company (Trademark of Union Carbide) anionic surfactants, such as, PC 1480 sodium lignosulfate,. A more preferred surfactant is TRITON* X45 surfactant. A sufficient amount of surfactant is used to enhance application of the asphalt emulsion, that is, the asphalt composition is not too viscous, and which enhances the drying or bakeability of the asphalt composition. Preferably the amount of surfactant is .01 percent by weight or greater, more preferably .02 percent by weight or greater, even more preferably 0.05 percent by weight or greater and most preferably 0.1 percent by weight or greater. Preferably the amount of surfactant is 1.0 percent by weight or less, more preferably 0.4 percent by weight or less, and more preferably 0.3 percent by weight or less.

Any solvent or plasticizer which improves the bakeability and rheology of the composition may be used. Among useful solvents are alkyl ethers, aromatic hydrocarbons, aliphatic hydrocarbons, fractionated derivatives of crude oil, glycol ethers, glycols and glycol ether acetates. Among more preferred solvents are naphtha, mineral spirits, fuel oil, ethylene glycol, monobutyl ether, propylene glycol, diethylene glycol butyl ether and ethylene glycol butyl ether acetate.

Among useful plasticizers are dioctyl phthalate, alkyl benzyl phthalate, dialkyl adipate, dipropylene glycol dibenzoate, triethylene glycol dibenzoate, liquid and epoxy.

The amount of solvent or plasticizer used is that amount which softens the composition and improves bakeability. Preferably the amount of solvents present is 0.1 percent by weight or more, more preferably 0.5 percent by weight or more, and preferably 5 percent by weight or less and most preferably 2 percent by weight or less.

Preferably the solids content of the composition is 40 percent by weight or greater, more preferably 45 percent by weight or greater and most preferably 65 percent by weight or greater. Preferably the solids level is 85 percent by weight or less, more preferably 80 percent by weight or less, and most preferably 75 percent by weight or less.

The asphalt emulsion is prepared generally by melting the asphalt, heating water and thereafter contacting the asphalt, water and emulsifying agent with mixing to prepare a stable emulsion. The asphalt composition of the invention is prepared by contacting the asphalt emulsion with one or more fillers, and optionally one or more of plasticizers, surfactants, solvents or a mixture thereof under conditions to prepare a stable composition. After contacting the components, the components are mixed for a period of time necessary to prepare a stable composition.

The asphalt composition of the invention can be applied to a substrate using any conventional process known to one skilled in the art. Included in such conventional processes are casting, extrusion, spray application and swirl application. Swirl application means extrusion of a thin diameter bead of material while the application nozzle is swirled in a circular motion, resulting in a circular pattern drawn onto the substrate. When done correctly, the swirl pattern covers the intended application area completely, without voids. Preferably, the asphalt composition is applied using a spray application or a swirl application.

In a preferred embodiment, after applying the asphalt composition to the substrate, the substrate with the asphalt composition applied thereto is subjected to conditions such that the asphalt composition is dried. Preferably this is achieved by heating the substrate with the asphalt composition applied thereto to a temperature at which water is driven out of the asphalt composition. Lower temperatures are preferred from a standpoint of getting the best results. In those embodiments where drying time is not an issue temperatures at ambient up to 90°C, preferably up to 60°C are used. In some environments it is necessary to use a high temperature environment to dry the composition such as where the substrate is an automobile. Preferably the substrate with the asphalt composition thereon is capable of being heated at a temperature of 100°C or greater and more preferably 120°C or greater, even more preferably 130°C or greater and most preferably 140°C or greater. Preferably the substrate with the asphalt composition thereon can be baked or dried by being heated to a temperature of 205°C or less, more preferably 200° C or less, even more preferably 180°C or less and most preferably 170°C or less.

The substrate can be any structure for which damping of noise vibration and harshness is desired. It can be the shell of a machine or apparatus such as an industrial machine, a washer and parts of an automobile. In a preferred embodiment the substrate is a portion of an automobile, such as the trunk well, wheel well, rocker panel, firewall, floor boards or underbody. In the embodiment wherein the substrate is an automobile, the asphalt composition is preferably dried or baked in an existing primer or paint oven of an automobile assembly line. Automobile assembly lines generally have two or three ovens on the automobile assembly line. Some automobile lines have an oven designed to gel the sealer. All automobile lines have ovens for curing the primer coat, the paint coat and clear coat. The asphalt composition can adequately dry in such ovens. It is necessary for the asphalt composition to dry without delamination and blisters. The asphalt composition adheres to the substrate and provides excellent damping properties.

### Specific Embodiments

The following examples are provided for illustrative purposes only and are not intended to limit the scope of the claims. Unless otherwise stated all parts and percentages are by weight.

### Example 1

The following components were mixed in a ribbon type mixer as follows: 15000g of waterbased asphaltic emulsion (ERTECH* 20, available from Ergon Inc.), 9617g of Dolomite (calcium magnesium carbonate), and 36g TRITON* X45 surfactant (Trademark of Union Carbide Corporation, available from The Dow Chemical Company). The Brookfield viscosity (tested using #7 spindle) of composition was 14600 cps at 20 rpm, 8100 cps at 100 rpm. The composition was swirl applied to an e-coated substrate at a thickness of 1.0-5.0 mm using a Graco Precision Swirl device. The substrate with the asphalt composition coated thereon was air dried for 5 minutes and then dried at 350°F (metal temperature) for 20 minutes to yield a coating showing no cracking and blistering.

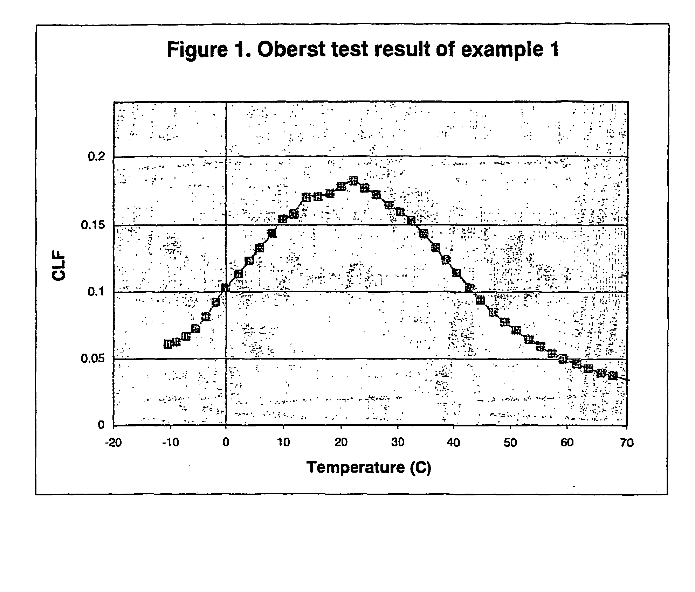

The vibration damping property was checked by Oberst test method (SAE J1637). The weight of material applied to metal beam after drying was 50 percent of the weight of metal beam. The test results were illustrated in Figure 1.

### Example 2

The following components were mixed in a Kitchen-Aid type mixer as follows: 180g of waterbased asphaltic emulsion (ERTECH* 2020, available from Ergon Asphalt and Emulsions Inc.), 190g of Barytes 291 (barium sulfate made by Zemex), 0.6g TRITON* X45 surfactant (available from The Dow Chemical Company). The press flow viscosity was 10.8 seconds (0.132mm orifice, 280 kPa, 20 g sample, tested at 25°C).

The composition was applied to an e-coated substrate using a drawing-down bar at a thickness of 2-3.7mm. The substrate with the asphalt composition coated thereon was air dried for 30 minutes and then dried at 350°F (metal temperature) for 20 minutes to yield a coating showing no cracking and blistering.

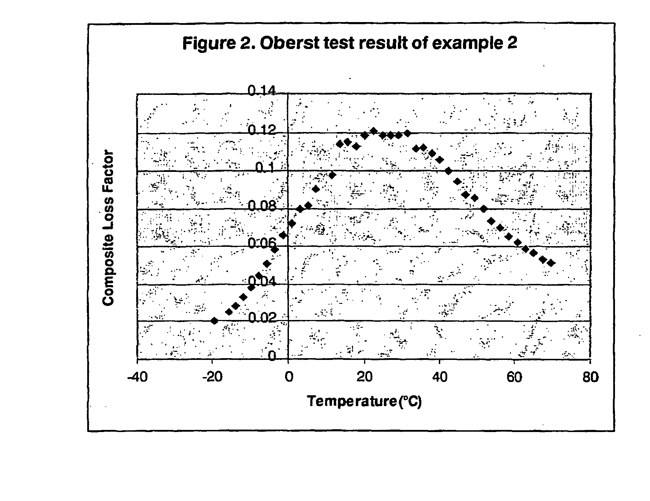

The vibration damping property of the coated substrate was checked by Oberst test method (SAE J1637). The weight of material applied to metal beam after drying was 40 percent of the weight of metal beam. The test results were illustrated in Figure 2.

### Examples 3 and 4

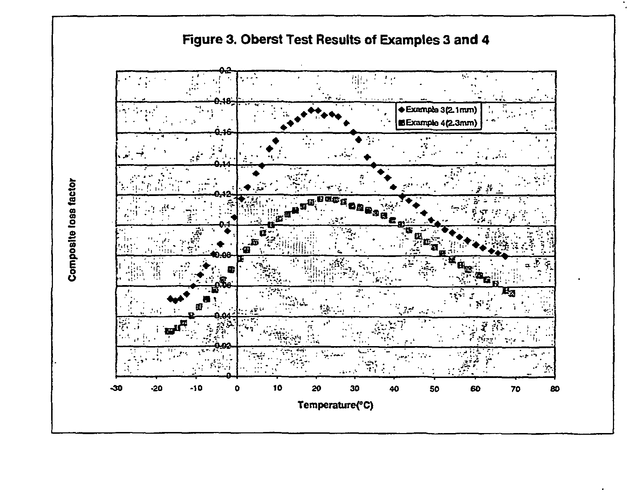

Asphalt compositions as described below in Table I were prepared and coated on a substrate as described in Example 2. Oberst testing as described above was performed on the samples. Figure 3 showed the Oberst results.

**Table I**

| Example | Asphalt Emulsion | Weight, Part | Filler | Weight, Part |
|---|---|---|---|---|
| Example 3 | ERTECH* 2000 | 182 | Dolomite | 110 |
| Example 4 | ERTECH* 2000 | 182 | Barytes 290 | 120 |

Barytes 290 was barium sulfate made by Zemex.
Example 3 demonstrated better damping properties than Example 4.

### Examples 5 to 7

Asphalt compositions as described below were prepared and coated on a substrate as described in Example 1. The composition for the damper comprised, in the amounts listed in Table II, ERTECH* 2000 asphalt emulsion, Dolomite filler and TRITON* X45 surfactant. Oberst testing as described above was performed on the samples.

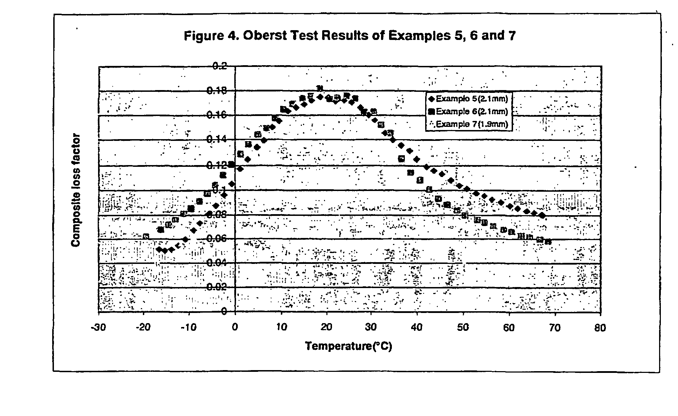

Figure 4 showed the Oberst results of following formulations.

**Table II**

| Example | Asphalt Emulsion | Weight, Part | Filler | Weight, Part |
|---|---|---|---|---|
| Example 5 | ERTECH* 2000 | 182 | Dolomite | 151 |
| Example 6 | ERTECH* 2000 | 182 | Dolomite | 110 |
| Example 7 | ERTECH* 2000 | 182 | Dolomite | 0 |

It can be seen that composite loss factor increased with adding Dolomite. When the ratio of Dolomite/ ERTECH* 2000 was higher than 110/182, adding more Dolomite did not have significant effect on damping performance.

### Examples 8 to 12

12x12 inch e-coated panels each covered with a 2.5mm layer of damper were used for a bakeability study. Dampers were applied on panels by either swirl or spray methods. The baking studies were carried out in a programmable oven. Type I bake schedule was: air dry the panel for 5 minutes, bake panel in 120°C oven for 10 minutes, cool off the panel at room temperature for 10 minutes, then bake the panel at 163°C for 20 minutes, cool off the panel at room temperature for 15 minutes, bake the panel at 140°C for 15 minutes. Type II bake schedule was: air dry the panel for 5 minutes, bake the panel at 163°C for 20 minutes, cool off the panel at room temperature for 15 minutes, bake the panel at 140 degrees C for 15 minutes. It was desired that the damper not show blisters and cracks after bake. The above described procedure was used for the studies described in Examples 9 to 12.

Table 3 showed the formulations that were used to study the effect of surfactant concentration on the bakeability. In all formulations the filler was Dolomite, the asphalt emulsion was ERTECH* 2020 asphalt emulsion and the surfactant was TRITON* X45 surfactant.

**Table III**

| Example | Asphalt Emulsion Weight, Part | Filler Weight, Part | Surfactant Percentage |
|---|---|---|---|
| Example 8 | 180 | 110 | 0 |
| Example 9 | 180 | 110 | 0.145 |
| Example 10 | 180 | 110 | 0.29 |
| Example 11 | 180 | 110 | 0.43 |
| Example 12 | 180 | 110 | 0.58 |

For Type I bake, Example 8 showed blisters and cracks after bake. Examples 9, 10,11 and 12 did not show blisters and cracks.

For Type II bake, Examples 8 and 9 showed blisters and cracks after bake. Examples10, 11 and 12 did not show blisters and delamination.

## Claims

1. A composition comprising a water-based asphalt emulsion, one or more fillers comprising an alkali metal carbonate, alkaline earth metal carbonate, sulfate or a mixture thereof and a nonionic surfactant.

2. The composition of Claim 1 wherein the asphalt is emulsified in water using a clay.

3. A composition according to Claim 1 or 2 wherein the filler is calcium carbonate, calcium magnesium carbonate, barium sulfate or a mixture thereof.

4. A composition according to any one of Claims 1 to 3 wherein the amount of water-based asphalt emulsion is 35 to 75 percent by weight, and the amount of filler is 25 to 65 percent by weight and the amount of nonionic surfactant is .01 to 1.0 percent by weight.

5. A composition according to any one of Claims 1 to 4 wherein the composition further comprises solvent or a plasticizer.

6. A composition according to any one of Claims 1 to 5 wherein the surfactant is an alkylphenoxy alkanol or an alkylphenoxy alkoxylated alkanol.

7. A method for improving the sound damping properties of a substrate which comprises applying a composition according to any one of Claims 1 to 6 a substrate to form a coherent coating on the substrate which dampens sound passing through the substrate.

8. A method according to Claim 7 which further comprises drying the applied composition.

9. A method according to any one of Claims 7 or 8 wherein the composition is swirled on the substrate.

10. An article comprising a substrate having a coating according to any one of Claims 1 to 6 thereon.

## Patentansprüche

1. Zusammensetzung, umfassend eine Asphaltemulsion auf Wasserbasis, einen oder mehrere Füllstoffe, umfassend ein Alkalimetallcarbonat, Erdalkalimetallcarbonat, Sulfat oder eine Mischung hiervon, und ein nichtionisches Tensid.

2. Zusammensetzung nach Anspruch 1, in welcher der Asphalt in Wasser unter Verwendung eines Tones emulgiert ist.

3. Zusammensetzung nach Anspruch 1 oder 2, in welcher der Füllstoff Calciumcarbonat, Calciummagnesiumcarbonat, Bariumsulfat oder eine Mischung hiervon ist.

4. Zusammensetzung nach irgendeinem der Ansprüche 1 bis 3, in welcher die Menge von Asphaltemulsion auf Wasserbasis 35 bis 75 Gew.-% beträgt und die Menge von Füllstoff 25 bis 65 Gew.-% beträgt und die Menge von nichtionischem Tensid 0,01 bis 10 Gew.-% beträgt.

5. Zusammensetzung nach irgendeinem der Ansprüche 1 bis 4, in welcher die Zusammensetzung weiter Lösungsmittel oder einen Weichmacher umfaßt.

6. Zusammensetzung nach irgendeinem der Ansprüche 1 bis 5,-in welcher das Tensid ein Alkylphenoxyalkanol oder ein Alkylphenoxy-alkoxyliertes-alkanol ist.

7. Verfahren zur Verbesserung der Schalldämpfungseigenschaften eines Substrates, welches das Aufbringen einer Zusammensetzung nach irgendeinem der Ansprüche 1 bis 6 auf ein Substrat zur Bildung einer zusammenhängenden Schicht auf dem Substrat, welche durch das Substrat durchgehenden Schall dämpft, umfaßt.

8. Verfahren entsprechend Anspruch 7, welches weiter das Trocknen der aufgebrachten Zusammensetzung umfaßt.

9. Verfahren entsprechend irgendeinem der Ansprüche 7 oder 8, bei welchem die Zusammensetzung auf dem Substrat verwirbelt wird.

10. Gegenstand, umfassend ein Substrat, welches eine Beschichtung entsprechend irgendeinem der Ansprüche 1 bis 6 hierauf hat.

## Revendications

1. Composition comprenant une émulsion d'asphalte à base d'eau, une ou plusieurs charges comprenant un carbonate de métal alcalin, un carbonate de métal alcalino-terreux, un sulfate ou un mélange de ces produits, et un tensio-actif non-ionique.

2. Composition selon la revendication 1, pour laquelle l'asphalte est émulsifié dans l'eau au moyen d'une argile.

3. Composition selon la revendication 1 ou 2, dont la charge est du carbonate de calcium, du carbonate de calcium et de magnésium, du sulfate de baryum ou un mélange de ces produits.

4. Composition selon l'une quelconque des revendications 1 à 3, qui contient 35 à 75% en poids d'émulsion d'asphalte à base d'eau, 25 à 65% en poids de charge et 0,01 à 1,0% en poids de tensio-actif non-ionique.

5. Composition selon l'une quelconque des revendications 1 à 4, qui comprend en outre un solvant ou un plastifiant.

6. Composition selon l'une quelconque des revendications 1 à 5, dont le tensio-actif est un alkylphénoxy-alcanol ou un alkylphénoxy-alcanol alcoxylé.

7. Procédé pour améliorer les propriétés d'amortissement des sons d'une structure sous-jacente, qui comprend l'application d'une composition selon l'une quelconque des revendications 1 à 6 sur une structure sous-jacente pour former sur la structure un revêtement cohérent qui amortit les sons traversant la structure.

8. Procédé selon la revendication 7, qui comprend en outre le séchage de la composition appliquée.

9. Procédé selon la revendication 7 ou 8, dans lequel on applique par tourbillonnement la composition sur la structure sous-jacente.

10. Pièce comprenant une structure sous-jacente qui porte un revêtement selon l'une quelconque des revendications 1 à 6.
